# FASCICULE DE BREVET EUROPEEN

(11) **EP 1 757 073 B1**
(45) Date de publication et mention de la délivrance du brevet: **16.12.2009**
(21) Numéro de dépôt: 05766719.8
(22) Date de dépôt: 31.05.2005
(51) Int. Cl.: H04L 29/12

(54) **ROUTAGE POUR DETECTION DE SERVEURS AU SEIN D'UN RESEAU DE COMMUNICATION**
ROUTEN ZUR SERVERERKENNUNG IN EINEM KOMMUNIKATIONSNETZ
ROUTING FOR DETECTION OF SERVERS WITHIN A COMMUNICATION NETWORK

(30) Priorité: 01.06.2004 FR 0451077
(43) Date de publication de la demande: 28.02.2007
(73) Titulaire: Alcatel Lucent, 75008 Paris (FR)
(72) Inventeur: PREGUICA, Christophe, F-78000 VERSAILLES (FR)
(74) Mandataire: Thibaud, Jean-Baptiste
(86) Numéro de dépôt international: PCT/FR2005/050396
(87) Numéro de publication internationale: WO 2005/120015

(56) Documents cités:
- US-A1- 2002 099 814
- US-A1- 2003 179 750
- LUC BELOEL: "IPv6 Router Advertisment DNS resolver Option" IETF, 1 juin 2003 (2003-06-01), XP015000234
- S. DANIEL PARK ET AL: "IPv6 Extensions for DNS Plug and Play" IETF, 1 avril 2003 (2003-04-01), XP015004780
- STEFANO M FACCIN ET AL: "An efficient method to discover an agent in the network" IETF, 1 février 2002 (2002-02-01), XP015004180

## Description

La présente invention est relative aux réseaux de communication, notamment ceux basés sur une pile protocolaire de type IP (*Internet Protocol*). Elle concerne plus précisément le routage au sein de tels réseaux.

Le routage est le processus par lequel les équipements de réseau communiquent des informations à leurs voisins, afin que chacun puisse avoir une vue suffisamment complète du réseau pour pouvoir acheminer de façon correcte les paquets à transmettre par le réseau de communication.

Ces informations, dites « de routage », sont transmises conformément à des protocoles de routage. Ces protocoles de routage sont par exemple OSPF (*Open Shortest Path First*), BGP (*Border Gateway Protocol*)... pour les réseaux fixes, ou TBRPF (*Topology Dissémination Based on Reversed-Path Forwarding*) ou OLSR (*Optimized Link-State Routing*), dans le domaine des réseaux mobiles « ad-hoc » ou MANET (acronyme pour « *Mobile Ad-hoc NETwork,* en langue anglaise).

Ces protocoles sont définis par des documents issus de l'IETF (*Internet Engineering Task Force*).

Les réseaux de communication peuvent par ailleurs contenir différents types de serveurs. Il peut s'agir de serveurs DNS (*Domain Name System*) tels que définis par les RFC 1034 et 1035 de l'IETF, de serveurs DHCP (*Dynamic Host Configuration Protocol*) tel que définis par les RFC 2131 et 2132, de serveurs LDAP (*Lightweight Directory Access Protocol*).

Les adresses des serveurs sont habituellement configurées manuellement sur chacun des équipements de réseau afin que ceux-ci aient accès à leurs services. Ces serveurs peuvent également être accessibles par une adresse globale (dite « multicast ») connue de chacun des équipements du réseau et leur permettant d'accéder aux services de serveur.

Toutefois une telle façon de faire n'est pas optimale, car il est connu de disposer de plusieurs serveurs implémentant les mêmes services au sein d'un même réseau.

Dans une telle situation, les différents serveurs partageant la même adresse globale, tous seront contactés.

Il peut alors être possible qu'un grand nombre, éventuellement tous, répondent à la requête, surchargeant ainsi inutilement le réseau, en consommant de la bande passante.

Cette solution nécessite de surcroît d'enregistrer l'adresse « multicast » auprès d'un organisme centralisant l'attribution de telles adresses, tel qu'actuellement l'IANA (*Internet Assigned Numbers Authority*).

De même, cette solution implique des contraintes sur l'architecture du réseau, et notamment de définir quel doit être la portée de la requête. Quoi qu'il en soit, le réseau devient difficile à administrer.

De plus, rien ne permet à un équipement de contacter le serveur le plus proche fournissant le service demandé. S'adresser à un serveur qui n'est pas le plus proche n'est pas optimal, car augmentant les temps de communication, et engorgeant le réseau.

Des documents IPV6 Router advertisement DNS Resolver Option, Beloel, Janvier 2003 et An efficient method to discover an agent in the network, Faccin et al., Février 2002, publiés par l'IETF, décrivent des utilisations de messages « Router Advertisement » qui participent à une fonction de découverte des routeurs mais non à un protocole de routage.

Le but de l'invention est de palier ces inconvénients en proposant un équipement de réseau disposant de moyens de communication avec des équipements voisins connectés par des réseaux de communication, et des moyens de routage pour transmettre des informations de routage à ces équipements voisins. Les informations de routage contiennent l'adresse associée à chacun des réseaux de communication. Cet équipement se **caractérise en ce que** ses moyens de routage sont aptes à ajouter dans les informations de routage, un indicateur de la présence d'un serveur connecté à un des réseaux de communication, associé à l'adresse de ce réseau de communication.

Selon un mode de réalisation, les moyens de routage insèrent les indicateurs de présence à une position correspondante au type du serveur.

Selon un mode de réalisation, les moyens de routage insèrent lesdits indicateurs sous forme d'indicateurs binaires ou drapeaux.

Selon une mise en oeuvre de l'invention, les types de serveur appartiennent à une liste comportant un serveur DNS, un serveur DHCP et un serveur LDAP.

L'invention a également pour objet un procédé mettant en oeuvre de tels équipements de réseau, c'est-à-dire, plus précisément, un procédé pour transmettre l'adresse d'un serveur (DNS, DHCP, LDAP ou autres) au sein d'un ensemble d'équipements de réseau. Ce procédé comporte la transmission d'informations de routage depuis chacun des équipements de réseau vers des équipements voisins connectés par des réseaux de communication, ces informations de routage contenant l'adresse associée à chacun des réseaux de communication.

Ce procédé se **caractérise en ce que** si le serveur est connecté à un réseau de communication, lui-même connecté à un équipement de réseau donné, cet équipement de réseau insère dans les informations de routage, un indicateur de la présence du serveur en question, associé à l'adresse du réseau de communication

Enfin, l'invention a aussi pour objet un programme d'ordinateur mettant en oeuvre le procédé ci-dessus, de façon distribuée sur cet ensemble d'équipements de réseau.

Ainsi, chaque équipement de réseau connaît où sont les serveurs ainsi que leur adresse. Il peut donc contacter chacun d'entre eux de façon individualisée, sans faire appel à une adresse globale comme dans l'état de la technique. De cette façon, on élimine la situation où plusieurs serveurs répondent à la même requête.

L'invention et ses avantages apparaîtront de façon plus claire dans la description qui va suivre en liaison avec les figures annexées.
La figure 1 représente un ensemble de réseaux connectés, comportant deux serveurs.
La figure 2 illustre la façon de construire une adresse de serveur.

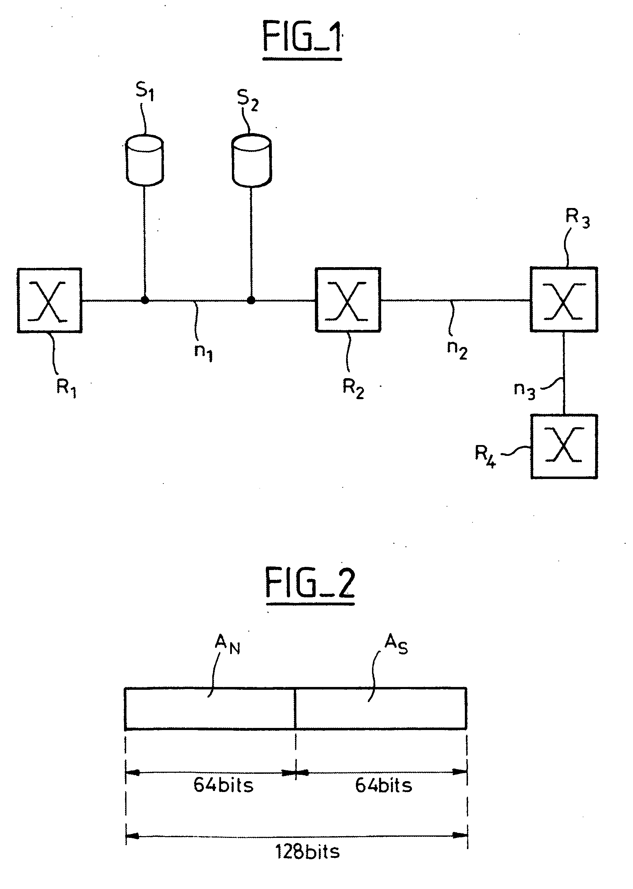

L'architecture représentée par la figure 1 comporte 4 équipements ou routeurs R₁, R₂, R₃ R₄ connectés ensemble par 3 réseaux n₁, n₂, n₃, Deux serveurs S₁ et S₂ sont par ailleurs connectés au réseau n₁.

De façon connue en soi, un protocole de routage mis en oeuvre sur cette architecture permet de véhiculer les adresses des réseaux n₁, n₂ et n₃ à travers l'architecture de sorte que chaque équipement la connaisse.

Ces adresses sont transmises au moyen d'informations de routage.

Selon l'invention, les moyens de routage de chaque routeur connecté à un réseau comportant au moins un serveur ajoutent dans les informations de routage, un ou plusieurs indicateurs de la présence de ce ou ces serveurs. Ce ou ces indicateurs sont associés à l'adresse du réseau correspondant.

Ainsi, l'équipement R₂ transmet des informations de routage contenant un ou plusieurs indicateurs de la présence des serveurs S₁ et S₂ associé au réseau n₁. Selon une mise en oeuvre de l'invention, l'équipement de réseau transmet un message de routage contenant plusieurs champs, dont au moins un champ contenant l'adresse du lien, un champ contenant une métrique associée à ce lien, et un champ de présence de serveur.

Selon un mode de réalisation, les moyens de routage insèrent les indicateurs de présence à une position correspondante au type de serveur.

Ces indicateurs peuvent par exemple être des indicateurs binaires (drapeau ou « *flag* » en anglais) indiquant la présence (par exemple « 1 ») ou l'absence (par exemple « 0 ») d'un serveur d'un type donné sur ce réseau.

Par exemple, les informations de réseau pour le réseau n₁ peuvent avoir la forme suivante :

| | | | |
|---|---|---|---|
| 0...0 | 1 | 1 | 0 |

Le premier « 1 » peut indiquer la présence d'un serveur de type « DNS » (par exemple S₁), le second « 1 », la présence d'un serveur de type « DHCP » (par exemple S₂) et le troisième bit à « 0 » indique l'absence d'un troisième type de serveur.

Ainsi, à chaque position, correspond un type de serveur.

De cette façon, n'importe quel équipement de l'architecture peut recevoir, en même temps que les informations de routage, des indicateurs sur la présence ou non des serveurs. Il peut alors déterminer où se trouvent les serveurs d'un type donné.

Selon un autre mode de réalisation, une valeur est associée à chaque type de serveur. Par exemple, la valeur 1 correspond au type « DNS », la valeur 2 (« 10 » en binaire) correspond au type « DHCP », la valeur 9 (« 1001 » en binaire) correspond à la présence de serveurs de type « DNS » et « DHCP » etc.

Le choix d'un mode de réalisation peut dépendre du nombre de serveurs.

Comme évoqué précédemment, selon certains protocoles de routage, une métrique est associée à chaque adresse de réseau véhiculée dans les informations de routage. Cette métrique permet de connaître l'éloignement d'un réseau selon un certain critère, par exemple le nombre minimal d'équipements reliant l'équipement et le réseau (« hop »).

Cette métrique peut être utilisée par l'équipement pour déterminer le serveur le plus proche offrant le service demandé. Pour un service donné, l'équipement peut consulter sa table de routage dans laquelle sont stockées les informations de routage précédemment reçues et déterminer l'ensemble des adresses de réseau associées à un indicateur de la présence d'un serveur du type donnée. L'équipement peut ensuite déterminer quelle adresse parmi cet ensemble est associée à la métrique la moins élevée et envoyer une requête de service vers celle-ci.

La figure 2 illustre la façon dont peut être construite l'adresse du serveur dans le cas d'une architecture de type IPv6 (*Internet Protocol version 6*). Celle-ci peut se décomposer en deux parties :
- l'adresse du réseau Aₙ
- un identifiant du serveur A_{S}.

L'adresse du réseau est celle fournie par les informations de routage (et qui peut être retrouvé par chaque équipement dans sa table de routage). L'identifiant du serveur A_{S} est une valeur prédéfinie correspondant au type de serveur.

Ces deux parties peuvent chacune être sur 64 bits et forment ensemble une adresse de 128 bits qui est de type « *Anycast* ».

Chaque équipement peut ainsi facilement reconstruire l'adresse « anycast » du serveur le plus proche, offrant le service demandé.

Dans le cadre du protocole OSPF v3, les identificateurs de présence des serveurs sont inclus dans le champ « *Préfix Option* » des LSA (*Link Status Advertisement*). Ce champ de 8 bits contient en effet 4 bits dont l'utilisation est laissée libre par le RFC 2740 de l'IETF.

Dans une mise en oeuvre de l'invention utilisant le protocole BGP, les identificateurs de présence de serveurs sont inclus dans le champ « *Attribute Flags* » de l'attribut « *Path Attribute* ».

Dans une mise en oeuvre de l'invention utilisant le protocole TBRPF, les identificateurs de présence de serveurs sont inclus dans le champ « Reserved » du message « *Network Prefix Association* ».

Préférentiellement, si un équipement déclenche une action d'agrégation des routes au sein de sa table de routage, il doit veiller à ce que les indications de présence de serveurs demeurent conformes à la réalité. Pour ce faire, il peut
- conserver une route non agrégée correspondant au réseau contenant un serveur.
- Agréger les routes, en supprimant les indicateurs de présence de serveur.

## Revendications

1. Équipement de réseau (R₂) disposant de moyens de communication avec des équipements voisins connectés par des réseaux de communication, et des moyens de routage pour transmettre conformément à un protocole de routage des informations de routage auxdits équipements voisins (R₁, R₃), contenant l'adresse associée à chacun desdits réseaux de communication (n₁, n₂), de sorte que chacun desdits équipements voisins connaisse les adresses desdits réseaux, **caractérisé en ce que** lesdits moyens de routage sont aptes à ajouter dons lesdites informations de routage, un indicateur de la présence d'un serveur (S₁, S₂) connecté à un desdits réseau de communication, associé à l'adresse dudit réseau de communication.

2. Équipement selon la revendication précédente, dans lequel lesdits moyens de routage insèrent lesdits indicateurs de présence à une position correspondante au type dudit serveur.

3. Équipement selon la revendication précédente, dans lequel lesdits moyens de routage insèrent lesdits indicateurs sous forme d'indicateurs binaires ou drapeaux.

4. Équipement selon l'une des revendications précédentes, dans lequel lesdits types de serveur appartiennent à une liste comportant un serveur DNS, un serveur DHCP et un serveur LDAP.

5. Procédé pour transmettre l'adresse d'un serveur au sein d'un ensemble d'équipements de réseau, comportant la transmission d'informations de routage conformément à un protocole de routage depuis chacun desdits équipements de réseau vers des équipements voisins connectés par des réseaux de communication, lesdites informations de routage contentant l'adresse associée a chacun desdits réseaux de communication, de sorte que chacun desdits équipements voisins connaisse les adresses desdits réseaux, **caractérisé en ce que** si ledit serveur est connecté à un réseau de communication, lui-même connecté à équipement de réseau donné, ledit équipement de réseau insère dans lesdites informations de routage, un indicateur de la présence dudit serveur, associé à l'adresse dudit réseau de communication.

## Claims

1. Network device (R₂) with means of communication with neighbouring devices connected through communication networks, and means of routing for sending, in accordance with a routing protocol, routing information to said neighbouring devices (R₁, R₃), containing the address associated with each of said communication networks (n₁, n₂), so that each of said neighbouring devices knows the addresses of said networks, **characterized in that** said means of routing are suitable for adding to said routing information an indicator of the presence of a server (S₁, S₂) connected to one of said communication networks, associated with the address of said communication network.

2. Device according to the previous claim, in which said means of routing insert said presence indicators in a position corresponding to the type of said server.

3. Device according to the previous claim, in which said means of routing insert said indicators in the form of binary indicators or flags.

4. Device according to one of the previous claims, in which said server types belong to a list comprising a DNS server, a DHCP server and an LDAP server.

5. Method for sending the address of a server within a set of network devices, comprising the transmission of routing information in accordance with a routing protocol from each of said network devices to neighbouring devices connected by communication networks, said routing information containing the address associated with each of said communication networks, so that each of said neighbouring devices knows the addresses of said networks, **characterized in that** if said server is connected to a communication network, itself connected to a given network device, said network device inserts into said routing information an indicator of the presence of said server, associated with the address of said communication network.

## Patentansprüche

1. Netzwerkausrüstung (R₂) mit Mitteln für die Kommunikation mit über Kommunikationsnetzwerke verbundenen benachbarten Ausrüstungen, und mit Routing-Mitteln für die Übertragung, gemäß einem Routing-Protokoll, von Routing-Informationen an die besagten benachbarten Ausrüstungen (R₁, R₃), wobei die besagten Routing-Informationen die einem jeden der besagten Kommunukationsnetwerke (n₁, n₂), zugeordnete Adresse enthalten, so dass eine jede der besagten benachbarten Ausrüstungen die Adressen der besagten Netzwerke kennt, **dadurch gekennzeichnet, dass** die besagten Routing-Mittel dazu ausgelegt sind, einen Präsenzindikator eines an eines der besagten Kommunikationsnetzwerke, welches mit der Adresse des besagten Kommunikationsnetzwerk assoziiert ist, angeschlossenen Servers (S₁, S₂) zu den besagten Routing-Informationen hinzuzufügen.

2. Ausrüstung nach dem vorstehenden Anspruch, wobei die besagten Routing-Mittel die besagten Präsenzindikatoren an einer dem Typ des besagten Servers entsprechenden Stelle einfügt.

3. Ausrüstung nach dem vorstehenden Anspruch, wobei die besagten Routing-Mittel die besagten Indikatoren in der Form von binären Indikatoren oder Fahnen einfügen.

4. Ausrüstung nach einem der vorstehenden Ansprüche, wobei die besagten Server-Typen einer Liste angehören, welche einen DNS-Server, einen DHCP-Server und einen LDAP-Server umfasst.

5. Verfahren zur Übertragung der Adresse eines Servers innerhalb einer Gruppe von Netzwerkausrüstungen, einschließlich der Übertragung von Routing-Informationen, gemäß einem Routing-Protokoll, von einer jeden der besagten Netzwerkausrüstungen an über Kommunikationsnetzwerke angeschlossene benachbarte Ausrüstungen, wobei die besagten Routing-Informationen die einem jeden der besagten Kommunukationsnetwerke zugeordnete Adresse enthalten, so dass eine jede der besagten benachbarten Ausrüstungen die Adressen der besagten Netzwerke kennt, **dadurch gekennzeichnet, dass** der besagte Server an ein Kommunikationsnetzwerk angeschlossen ist, welches seinerseits an eine gegebene Netzwerkausrüstung angeschlossen ist, wobei die besagte Netzwerkausrüstung einen Präsenzindikator des besagten mit der Adresse des besagten Kommunikationsnetzwerks assoziierten Servers in die besagten Routing-Informationen einfügt.
